# EUROPEAN PATENT SPECIFICATION

(11) **EP 3 052 814 B1**
(45) Date of publication and mention of the grant of the patent: **22.04.2020**
(21) Application number: 14787331.9
(22) Date of filing: 03.10.2014
(51) Int. Cl.: F04F 13/00, E21B 43/267

(54) **FRAC SYSTEM WITH HYDRAULIC ENERGY TRANSFER SYSTEM**
FRAC-SYSTEM MIT HYDRAULISCHEM ENERGIEÜBERTRAGUNGSSYSTEM
SYSTÈME DE FRACTURATION AVEC SYSTÈME DE TRANSFERT D'ÉNERGIE HYDRAULIQUE

(30) Priority: 03.10.2013 US 201361886638 P; 04.08.2014 US 201462033080 P
(43) Date of publication of application: 10.08.2016
(73) Proprietor: Energy Recovery, Inc., San Leandro, California 94577 (US)
(72) Inventor: GHASRIPOOR, Farshad, San Leandro, California 94577 (US); MARTIN, Jeremy Grant, San Leandro, California 94577 (US); KRISH, Prem, San Leandro, California 94577 (US); GOBBURI, Baji, San Leandro, California 94577 (US)
(74) Representative: Knöner, Gregor
(86) International application number: PCT/US2014/059157
(87) International publication number: WO 2015/051316

(56) References cited:
- CA-A1- 2 773 019
- US-A- 3 560 053
- US-A1- 2006 037 895
- US-A1- 2009 301 725
- US-A1- 2011 176 936
- US-A1- 2012 217 011
- LOZIER J ET AL: "THE HYDRAULIC TURBOCHARGERTM: A NEW TYPE OF DEVICE FOR THE REDUCTION OF FEED PUMP ENERGY CONSUMPTION IN REVERSE OSMOSIS SYSTEMS", DESALINATION, ELSEVIER, AMSTERDAM, NL, vol. 75, no. 1 / 03, 1 November 1989 (1989-11-01), pages 71-83, XP000201291, ISSN: 0011-9164, DOI: 10.1016/0011-9164(89)85006-4
- STOVER ET AL: "Seawater reverse osmosis with isobaric energy recovery devices", DESALINAT, ELSEVIER, AMSTERDAM, NL, vol. 203, no. 1-3, 24 January 2007 (2007-01-24), pages 168-175, XP005856949, ISSN: 0011-9164, DOI: 10.1016/J.DESAL.2006.03.528
- John H Reif ET AL: "Solar-thermal powered desalination: Its significant challenges and potential", Renewable and Sustainable Energy Reviews, 14 November 2005 (2005-11-14), pages 152-165, XP055447505, DOI: 10.1016/j.rser.2015.03.065 Retrieved from the Internet: URL:https://www.researchgate.net/publicati on/267771476_ENERGY_RECOVERY_DEVICE_PERFOR MANCE_ANALYSIS [retrieved on 2018-02-02]
- SUN J ET AL: "Energy Recovery Device with a Fluid Switcher for Seawater Reverse Osmosis System", CHINESE JOURNAL OF CHEMICAL ENGINEERING, CHEMICAL INDUSTRY PRESS, BEIJING, CN, vol. 16, no. 2, 1 April 2008 (2008-04-01), pages 329-332, XP022856577, ISSN: 1004-9541, DOI: 10.1016/S1004-9541(08)60083-X [retrieved on 2008-04-01]
- A M Farooque ET AL: "COMPARATIVE STUDY OF VARIOUS ENERGY RECOVERY DEVICES USED IN SWRO PROCESS", , 31 December 2004 (2004-12-31), XP055641546, Retrieved from the Internet: URL:http://citeseerx.ist.psu.edu/viewdoc/d ownload?doi=10.1.1.501.5964&rep=rep1&type= pdf [retrieved on 2019-11-12]
- EL-GHONEMY A M K: "Waste energy recovery in seawater reverse osmosis desalination plants. Part 2: Case study", RENEWABLE AND SUSTAINABLE ENERGY REVIEWS, ELSEVIERS SCIENCE, NEW YORK, NY, US, vol. 16, no. 6, 15 March 2012 (2012-03-15) , pages 4016-4028, XP028496833, ISSN: 1364-0321, DOI: 10.1016/J.RSER.2012.03.057 [retrieved on 2012-04-06]
- Zhou Yihui ET AL: "Rotary pressure exchanger for SWRO", , 22 September 2011 (2011-09-22), XP055641639, Retrieved from the Internet: URL:http://cdn.intechweb.org/pdfs/20345.pd f [retrieved on 2019-11-12]
- Mageed Jean Guirguis: "Energy Recovery Devices in Seawater Reverse Osmosis Desalination Plants with Emphasis on Efficiency and Economical Analysis of Isobaric versus Centrifugal Devices", , 30 October 2011 (2011-10-30), XP055641711, Retrieved from the Internet: URL:http://scholarcommons.usf.edu/cgi/view content.cgi?article=4330&context=etd [retrieved on 2019-11-12]

## Description

### CROSS REFERENCE TO RELATED APPLICATIONS

This application claims priority to and benefit of U.S. Provisional Patent Application No. 61/886,638, entitled "Isobaric Pressure Exchanger Protection for Hydraulic Fracturing Fluid Pumps," filed October 3, 2013, U.S. Provisional Patent Application No. 62/033,080, entitled "Frac System with Hydraulic Energy Transfer System," filed August 4, 2014, and U.S. Non-Provisional Patent Application No. 14/505,885, entitled "Frac System with Hydraulic Energy Transfer System," filed on October 3, 2014.

### BACKGROUND

This section is intended to introduce the reader to various aspects of art that may be related to various aspects of the present invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

Well completion operations in the oil and gas industry often involve hydraulic fracturing (often referred to as fracking or fracing) to increase the release of oil and gas in rock formations. Hydraulic fracturing involves pumping a fluid (e.g., frac fluid) containing a combination of water, chemicals, and proppant (e.g., sand, ceramics) into a well at high pressures. The high pressures of the fluid increases crack size and crack propagation through the rock formation releasing more oil and gas, while the proppant prevents the cracks from closing once the fluid is depressurized. Fracturing operations use high-pressure pumps to increase the pressure of the frac fluid. Unfortunately, the proppant in the frac fluid increases wear and maintenance on the high-pressure pumps.

The document US 2012/02170011 A1 relates to the supplying of an abrasive jet tool with an abrasive fluid. The system includes a high pressure vessel that is filled with abrasive slurry. A high pressure fluid pushs the abrasive slurry through the high pressure vessel, and on to the abrasive jet tool.

The document CA 2 773 019 A1 relates to a system for preparing a combined fracturing fluid from a first fluid mixture containing a proppant and a second fluid mixture. The fluids are pumped with respective high pressure pumps and combined with a T-connector.

The document US 3,560,053 A relates to a system for pumping hydraulic fracturing fluid in which a fluid containing a propping agent, such as sand, is charged into an accumulator bank at low pressure and then displaced from the accumulator bank at high pressure.

The document US 2006/037895 A1 relates to a system producing potable water by reverse osmosis, the system comprising a pressure exchange apparatus with an integral high pressure boost pump.

The document US 20009/0301725 A1 relates to injecting fracturing fluids into a wellbore and to injecting proppants downstream of clean high-pressure pumps.

The document "The Hydraulic Turbocharger™: A New Type of Device for the Reduction of Feed Pump Energy Consumption In Reverse Osmosis Systems", J. Lozier et al., Desalination vol. 75, no. 1 (1989), pages 71-83, describes a hydraulic turbocharger that is provided in form of a feedwater lubricated, free running, high speed turbine driven pump. The hydraulic turbocharger consists of a radial inflow turbine that is directly coupled to a centrifugal pump-type impeller. High pressure brine enters the turbine half of the unit where its pressure energy is transferred to the reverse osmosis pump discharge via the pump side impeller.

The document "Seawater reverse osmosis with isobaric energy recovery devices", Stover et al., Desalination vol. 203 (2007), pages 168-175 describes the use of a rotary isobaric energy recovery device to transfer energy from a membrane reject stream of a desalination plant directly to an membrane feed stream feeding a reverse osmosis membrane.

The document "Energy Recovery Device Performance Analysis", R. L. Stover, Water Middle East 2005, available at https://www.researchgate.net/publication/267771476_ENERGY_RECOVERY_DEVICE _PERFORMANCE_ANALYSIS, describes a rotary isobaric pressure exchange device that comprises a ceramic rotor fit into a sleeve between two endcovers, the rotor comprising channels in which the pressure exchange occurs.

The document "Energy Recovery Device with a Fluid Switcher for Seawater Reverse Osmosis System", J. Sun et al., Chinese Journal of Chemical Engineering vol. 16, no. 2 (2008), pages 329-332 describes a work exchanger for a reverse osmosis desalination system. The work exchanger includes pressure exchange cylinders and a fluid switcher driven by a motor which alternatingly connects brine inlets and outlets to the cylinders.

### SUMMARY

The invention is defined in the independent claims. The dependent claims describe embodiments of the invention.

### BRIEF DESCRIPTION OF THE DRAWINGS

Various features, aspects, and advantages of the present invention will become better understood when the following detailed description is read with reference to the accompanying figures in which like characters represent like parts throughout the figures, wherein:
FIG. 1 is a schematic diagram of an embodiment of a frac system with a hydraulic energy transfer system;
FIG. 2 is a schematic diagram of an embodiment of a hydraulic turbocharger;
FIG. 3 is a schematic diagram of an embodiment of a reciprocating isobaric pressure exchanger (reciprocating IPX);
FIG. 4 is a schematic diagram of an embodiment of a reciprocating IPX;
FIG. 5 is an exploded perspective view of an embodiment of a rotary isobaric pressure exchanger (rotary IPX);
FIG. 6 is an exploded perspective view of an embodiment of a rotary IPX in a first operating position;
FIG. 7 is an exploded perspective view of an embodiment of a rotary IPX in a second operating position;
FIG. 8 is an exploded perspective view of an embodiment of a rotary IPX in a third operating position;
FIG. 9 is an exploded perspective view of an embodiment of a rotary IPX in a fourth operating position;
FIG. 10 is a schematic diagram of an embodiment of a frac system with a hydraulic energy transfer system; and
FIG. 11 is a schematic diagram of an embodiment of a frac system with a hydraulic energy transfer system.

### DETAILED DESCRIPTION OF SPECIFIC EMBODIMENTS

One or more specific embodiments of the present invention will be described below. These described embodiments are only exemplary of the present invention. Additionally, in an effort to provide a concise description of these exemplary embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As discussed in detail below, the frac system or hydraulic fracturing system includes a hydraulic energy transfer system that transfers work and/or pressure between a first fluid (e.g., a pressure exchange fluid, such as a substantially proppant free fluid) and a second fluid (e.g., frac fluid, such as a proppant-laden fluid). For example, the first fluid may be at a first pressure between approximately 5,000 kPa to 25,000 kPa, 20,000 kPa to 50,000 kPa, 40,000 kPa to 75,000 kPa, 75,000 kPa to 100,000 kPa or greater than the second pressure of the second fluid. In operation, the hydraulic energy transfer system may or may not completely equalize pressures between the first and second fluids. Accordingly, the hydraulic energy transfer system may operate isobarically, or substantially isobarically (e.g., wherein the pressures of the first and second fluids equalize within approximately +/- 1, 2, 3, 4, 5, 6, 7, 8, 9, or 10 percent of each other).

The hydraulic energy transfer system may also be described as a hydraulic protection system, hydraulic buffer system, or a hydraulic isolation system, because it blocks or limits contact between a frac fluid and various hydraulic fracturing equipment (e.g., high-pressure pumps), while still exchanging work and/or pressure between the first and second fluids. By blocking or limiting contact between various pieces of hydraulic fracturing equipment and the second fluid (e.g., proppant containing fluid), the hydraulic energy transfer system reduces abrasion/wear, thus increasing the life/performance of this equipment (e.g., high-pressure pumps). Moreover, it may enable the frac system to use less expensive equipment in the fracturing system, for example high-pressure pumps that are not designed for abrasive fluids (e.g., frac fluids and/or corrosive fluids). In some embodiments, the hydraulic energy transfer system may be a hydraulic turbocharger, a rotating isobaric pressure exchanger (e.g., rotary IPX), or a non-rotating isobaric pressure exchanger (e.g., bladder, reciprocating isobaric pressure exchanger). Rotating and non-rotating isobaric pressure exchangers may be generally defined as devices that transfer fluid pressure between a high-pressure inlet stream and a low-pressure inlet stream at efficiencies in excess of approximately 50%, 60%, 70%, 80%, or 90% without utilizing centrifugal technology.

As explained above, the hydraulic energy transfer system transfers work and/or pressure between first and second fluids. These fluids may be multi-phase fluids such as gas/liquid flows, gas/solid particulate flows, liquid/solid particulate flows, gas/liquid/solid particulate flows, or any other multi-phase flow. Moreover, these fluids may be non-Newtonian fluids (e.g., shear thinning fluid), highly viscous fluids, non-Newtonian fluids containing proppant, or highly viscous fluids containing proppant. The proppant may include sand, solid particles, powders, debris, ceramics, or any combination therefore.

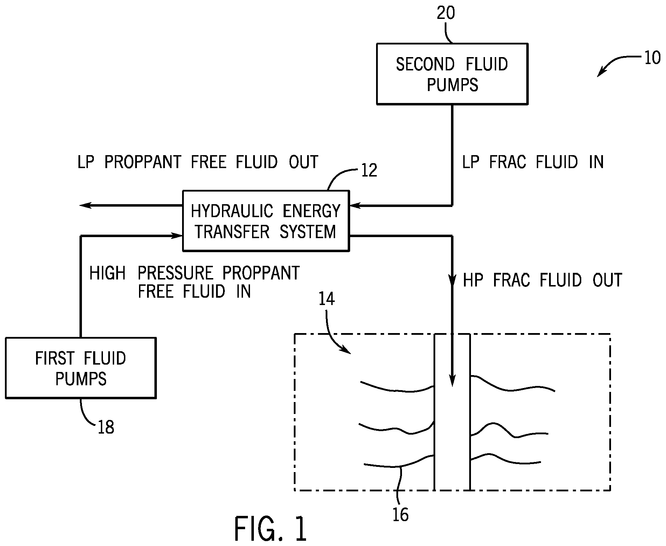

FIG. 1 is a schematic diagram of an embodiment of the frac system 10 (e.g., fluid handling system) with a hydraulic energy transfer system 12. In operation, the frac system 10 enables well completion operations to increase the release of oil and gas in rock formations. The frac system 10 may include one or more first fluid pumps 18 and one or more second fluid pumps 20 coupled to a hydraulic energy transfer system 12. For example, the hydraulic energy system 12 may include a hydraulic turbocharger, rotary IPX, reciprocating IPX, or any combination thereof. In addition, the hydraulic energy transfer system 12 may be disposed on a skid separate from the other components of a frac system 10, which may be desirable in situations in which the hydraulic energy transfer system 12 is added to an existing frac system 10. In operation, the hydraulic energy transfer system 12 transfers pressures without any substantial mixing between a first fluid (e.g., proppant free fluid) pumped by the first fluid pumps 18 and a second fluid (e.g., proppant containing fluid or frac fluid) pumped by the second fluid pumps 20. In this manner, the hydraulic energy transfer system 12 blocks or limits wear on the first fluid pumps 18 (e.g., high-pressure pumps), while enabling the frac system 10 to pump a high-pressure frac fluid into the well 14 to release oil and gas. In addition, because the hydraulic energy transfer system 12 is configured to be exposed to the first and second fluids, the hydraulic energy transfer system 12 may be made from materials resistant to corrosive and abrasive substances in either the first and second fluids. For example, the hydraulic energy transfer system 12 may be made out of ceramics (e.g., alumina, cermets, such as carbide, oxide, nitride, or boride hard phases) within a metal matrix (e.g., Co, Cr or Ni or any combination thereof) such as tungsten carbide in a matrix of CoCr, Ni, NiCr or Co.

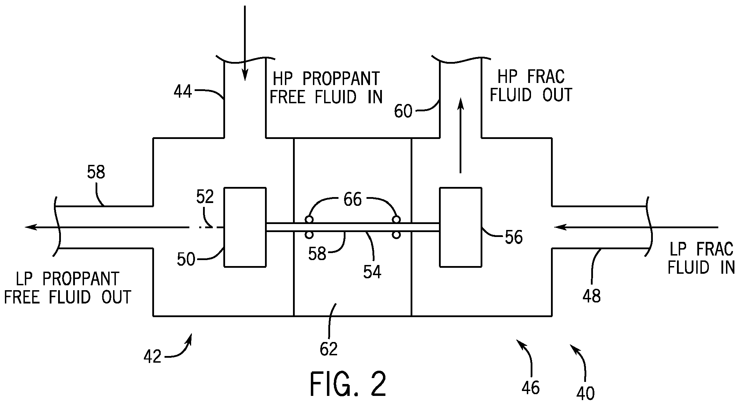

FIG. 2 is a schematic diagram of an embodiment of a hydraulic turbocharger 40. As explained above, the frac system 10 may use a hydraulic turbocharger 40 as the hydraulic energy transfer system 12. In operation, the hydraulic turbocharger 40 enables work and/or pressure transfer between the first fluid (e.g., high-pressure proppant free fluid, substantially proppant free) and a second fluid (e.g., proppant containing fluid) while blocking or limiting contact (and thus mixing) between the first and second fluids. As illustrated, the first fluid enters a first side 42 of the hydraulic turbocharger 40 through a first inlet 44, and the second fluid (e.g., low-pressure frac fluid) may enter the hydraulic turbocharger 40 on a second side 46 through a second inlet 48. As the first fluid enters the hydraulic turbocharger 40, the first fluid contacts the first impeller 50 transferring energy from the first fluid to the first impeller; this drives rotation of the first impeller 50 about the axis 52. The rotational energy of the first impeller 50 is then transferred through the shaft 54 to the second impeller 56. After transferring energy to the first impeller 50, the first fluid exits the hydraulic turbocharger 40 as a low-pressure fluid through a first outlet 58. The rotation of the second impeller 56 then increases the pressure of the second fluid entering the hydraulic turbocharger 40 through the inlet 48. Once pressurized, the second fluid exits the hydraulic turbocharger 40 as a high-pressure frac fluid capable of hydraulically fracturing the well 14.

In order to block contact between the first and second fluids, the hydraulic turbocharger 40 includes a wall 62 between the first and second sides 42, 46. The wall 62 includes an aperture 64 that enables the shaft 58 (e.g., cylindrical shaft) to extend between the first and second impellers 50 and 56 but blocks fluid flow. In some embodiments, the hydraulic turbocharger 40 may include gaskets/seals 66 (e.g., annular seals) that may further reduce or block fluid exchange between the first and second fluids.

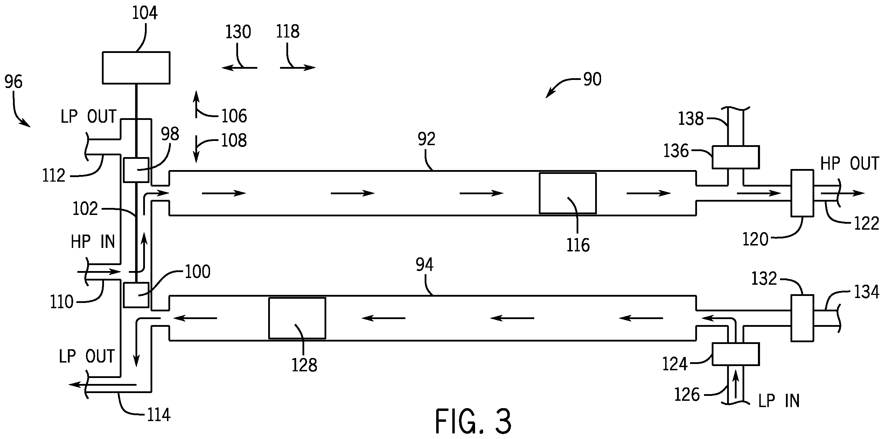

FIG. 3 is a schematic diagram of a reciprocating isobaric pressure exchanger 90 (reciprocating IPX). The reciprocating IPX 90 may include first and second pressure vessels 92, 94 that alternatingly transfer pressure from the first fluid (e.g., high-pressure proppant free fluid) to the second fluid (e.g., proppant containing fluid, frac fluid) using a valve 96. In other embodiments, there may be additional pressure vessels (e.g., 2, 4, 6, 8, 10, 20, 30, 40, 50, or more). As illustrated, the valve 96 includes a first piston 98, a second piston 100, and a shaft 102 that couples the first piston 98 to the second piston 100 and to a drive 104 (e.g., electric motor, hydraulic motor, combustion motor, etc.). The drive 104 drives the valve 96 in alternating axial directions 106 and 108 to control the flow of the first fluid entering through the high-pressure inlet 110. For example, in a first position, the valve 96 uses the first and second pistons 98 and 100 to direct the high-pressure first fluid into the first pressure vessel 92, while blocking the flow of high-pressure first fluid into the second pressure vessel 94 or out of the valve 96 through the low-pressure outlets 112 and 114. As the high-pressure first fluid enters the first pressure vessel 92, the first fluid drives a pressure vessel piston 116 in axial direction 118, which increase the pressure of the second fluid within the first pressure vessel 92. Once the second fluid reaches the appropriate pressure, a high-pressure check valve 120 opens enabling high-pressure second fluid to exit the reciprocating IPX 90 through the high-pressure outlet 122 for use in fracing operations. While the first pressure vessel 92 discharges, the reciprocating IPX 90 prepares the second pressure vessel 94 to pressurize the second fluid. As illustrated, low-pressure second fluid enters the second pressure vessel 94 through a low-pressure check valve 124 coupled to a low-pressure second fluid inlet 126. As the second fluid fills the second pressure vessel 94, the second fluid drives a pressure vessel piston 128 in axial direction 130 forcing low-pressure first fluid out of the second pressure vessel 94 and out of the valve 96 through the low-pressure outlet 114, preparing the second pressure vessel 94 to receive high-pressure first fluid.

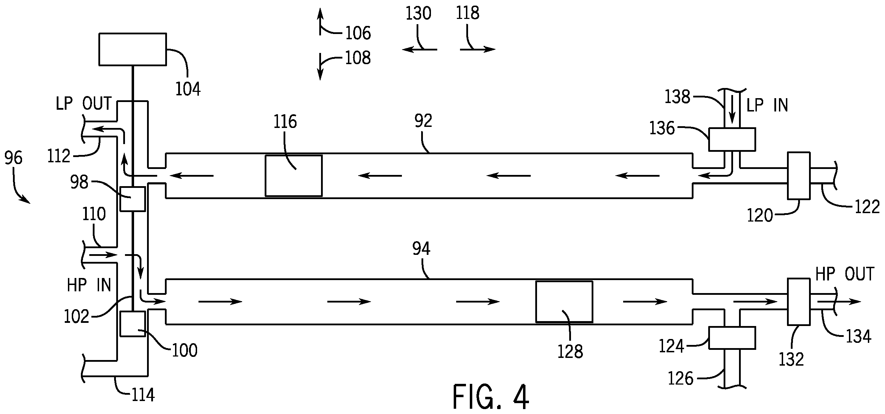

FIG. 4 is a schematic diagram of the reciprocating IPX 90 with the second pressure vessel 94 discharging high-pressure second fluid, and the first pressure vessel 92 filling with low-pressure second fluid. As illustrated, the valve 96 is in a second position. In the second position, the valve 96 directs the high-pressure first fluid into the second pressure vessel 94, while blocking the flow of high-pressure first fluid into the first pressure vessel 92, or out of valve 96 through the low-pressure outlets 112 and 114. As the high-pressure first fluid enters the second pressure vessel 94, the first fluid drives the pressure vessel piston 128 in axial direction 118 to increase the pressure of the second fluid within the second pressure vessel 94. Once the second fluid reaches the appropriate pressure, a high-pressure check valve 132 opens enabling high-pressure second fluid to exit the reciprocating IPX 90 through the high-pressure outlet 134 for use in fracing operations. While the second pressure vessel 94 discharges, the first pressure vessel 92 fills with the second fluid passing through a low-pressure check valve 136 coupled to a low-pressure second fluid inlet 138. As the second fluid fills the first pressure vessel 92, the second fluid drives the pressure vessel piston 116 in axial direction 130 forcing low-pressure first fluid out of the first pressure vessel 92 and out through the low-pressure outlet 112. In this manner, the reciprocating IPX 90 alternatingly transfers pressure from the first fluid (e.g., high-pressure proppant free fluid) to the second fluid (e.g., proppant containing fluid, frac fluid) using the first and second pressure vessels 90, 92. Moreover, because the pressure vessel pistons 116 and 128 separate the first and second fluids, the reciprocating IPX 90 is capable of protecting fracing system equipment (e.g., high-pressure fluid pumps fluidly coupled to the high-pressure inlet 110) from contact with the second fluid (e.g., corrosive and/or proppant containing fluid).

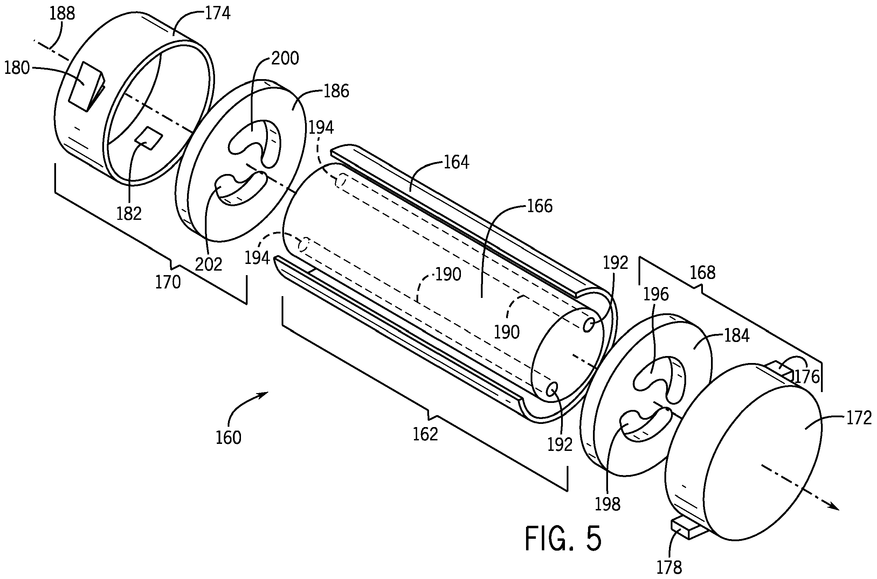

FIG. 5 is an exploded perspective view of an embodiment of a rotary isobaric pressure exchanger 160 (rotary IPX) capable of transferring pressure and/or work between first and second fluids (e.g., proppant free fluid and proppant laden fluid) with minimal mixing of the fluids. The rotary IPX 160 may include a generally cylindrical body portion 162 that includes a sleeve 164 and a rotor 166. The rotary IPX 160 may also include two end caps 168 and 170 that include manifolds 172 and 174, respectively. Manifold 172 includes respective inlet and outlet ports 176 and 178, while manifold 174 includes respective inlet and outlet ports 180 and 182. In operation, these inlet ports 176, 180 enabling the first fluid (e.g., proppant free fluid) to enter the rotary IPX 160 to exchange pressure, while the outlet ports 180, 182 enable the first fluid to then exit the rotary IPX 160. In operation, the inlet port 176 may receive a high-pressure first fluid, and after exchanging pressure, the outlet port 178 may be used to route a low-pressure first fluid out of the rotary IPX 160. Similarly, inlet port 180 may receive a low-pressure second fluid (e.g., proppant containing fluid, frac fluid) and the outlet port 182 may be used to route a high-pressure second fluid out of the rotary IPX 160. The end caps 168 and 170 include respective end covers 184 and 186 disposed within respective manifolds 172 and 174 that enable fluid sealing contact with the rotor 166. The rotor 166 may be cylindrical and disposed in the sleeve 164, which enables the rotor 166 to rotate about the axis 188. The rotor 166 may have a plurality of channels 190 extending substantially longitudinally through the rotor 166 with openings 192 and 194 at each end arranged symmetrically about the longitudinal axis 188. The openings 192 and 194 of the rotor 166 are arranged for hydraulic communication with inlet and outlet apertures 196 and 198; and 200 and 202 in the end covers 172 and 174, in such a manner that during rotation the channels 190 are exposed to fluid at high-pressure and fluid at low-pressure. As illustrated, the inlet and outlet apertures 196 and 198, and 78 and 80 may be designed in the form of arcs or segments of a circle (e.g., C-shaped).

In some embodiments, a controller using sensor feedback may control the extent of mixing between the first and second fluids in the rotary IPX 160, which may be used to improve the operability of the fluid handling system. For example, varying the proportions of the first and second fluids entering the rotary IPX 160 allows the plant operator to control the amount of fluid mixing within the hydraulic energy transfer system 12. Three characteristics of the rotary IPX 160 that affect mixing are: (1) the aspect ratio of the rotor channels 190, (2) the short duration of exposure between the first and second fluids, and (3) the creation of a fluid barrier (e.g., an interface) between the first and second fluids within the rotor channels 190. First, the rotor channels 190 are generally long and narrow, which stabilizes the flow within the rotary IPX 160. In addition, the first and second fluids may move through the channels 190 in a plug flow regime with very little axial mixing. Second, in certain embodiments, the speed of the rotor 166 reduces contact between the first and second fluids. For example, the speed of the rotor 166 may reduce contact times between the first and second fluids to less than approximately 0.15 seconds, 0.10 seconds, or 0.05 seconds. Third, a small portion of the rotor channel 190 is used for the exchange of pressure between the first and second fluids. Therefore, a volume of fluid remains in the channel 190 as a barrier between the first and second fluids. All these mechanisms may limit mixing within the rotary IPX 160. Moreover, in some embodiments, the rotary IPX 160 may be designed to operate with internal pistons that isolate the first and second fluids while enabling pressure transfer.

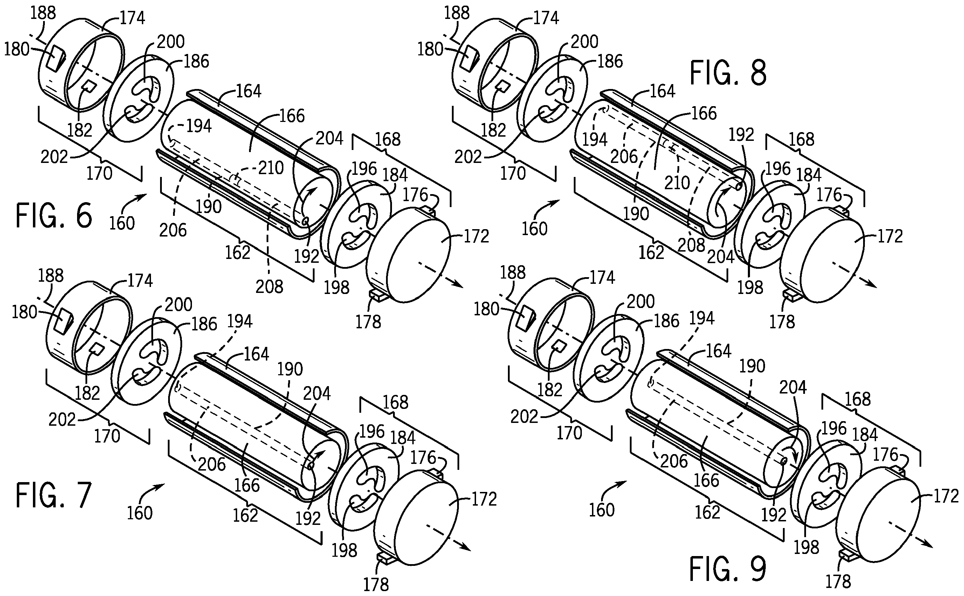

FIGS. 6-9 are exploded views of an embodiment of the rotary IPX 160 illustrating the sequence of positions of a single channel 190 in the rotor 166 as the channel 190 rotates through a complete cycle. It is noted that FIGS. 6-9 are simplifications of the rotary IPX 160 showing one channel 190, and the channel 190 is shown as having a circular cross-sectional shape. In other embodiments, the rotary IPX 160 may include a plurality of channels 190 with the same or different cross-sectional shapes (e.g., circular, oval, square, rectangular, polygonal, etc.). Thus, FIGS. 6-9 are simplifications for purposes of illustration, and other embodiments of the rotary IPX 160 may have configurations different from that shown in FIGS. 6-9. As described in detail below, the rotary IPX 160 facilitates pressure exchange between first and second fluids (e.g., proppant free fluid and proppant-laden fluid) by enabling the first and second fluids to momentarily contact each other within the rotor 166. In certain embodiments, this exchange happens at speeds that result in limited mixing of the first and second fluids.

In FIG. 6, the channel opening 192 is in a first position. In the first position, the channel opening 192 is in fluid communication with the aperture 198 in endplate 184 and therefore with the manifold 172, while opposing channel opening 194 is in hydraulic communication with the aperture 202 in end cover 186 and by extension with the manifold 174. As will be discussed below, the rotor 166 may rotate in the clockwise direction indicated by arrow 204. In operation, low-pressure second fluid 206 passes through end cover 186 and enters the channel 190, where it contacts the first fluid 208 at a dynamic fluid interface 210. The second fluid 206 then drives the first fluid 208 out of the channel 190, through end cover 184, and out of the rotary IPX 160. However, because of the short duration of contact, there is minimal mixing between the second fluid 206 and the first fluid 208.

In FIG. 7, the channel 190 has rotated clockwise through an arc of approximately 90 degrees. In this position, the outlet 194 is no longer in fluid communication with the apertures 200 and 202 of end cover 186, and the opening 192 is no longer in fluid communication with the apertures 196 and 198 of end cover 184. Accordingly, the low-pressure second fluid 206 is temporarily contained within the channel 190.

In FIG. 8, the channel 190 has rotated through approximately 180 degrees of arc from the position shown in FIG. 6. The opening 194 is now in fluid communication with aperture 200 in end cover 186, and the opening 192 of the channel 190 is now in fluid communication with aperture 196 of the end cover 184. In this position, high-pressure first fluid 208 enters and pressurizes the low-pressure second fluid 206 driving the second fluid 206 out of the fluid channel 190 and through the aperture 200 for use in the frac system 10.

In FIG. 9, the channel 190 has rotated through approximately 270 degrees of arc from the position shown in FIG. 6. In this position, the outlet 194 is no longer in fluid communication with the apertures 200 and 202 of end cover 186, and the opening 192 is no longer in fluid communication with the apertures 196 and 198 of end cover 184. Accordingly, the first fluid 208 is no longer pressurized and is temporarily contained within the channel 190 until the rotor 166 rotates another 90 degrees, starting the cycle over again.

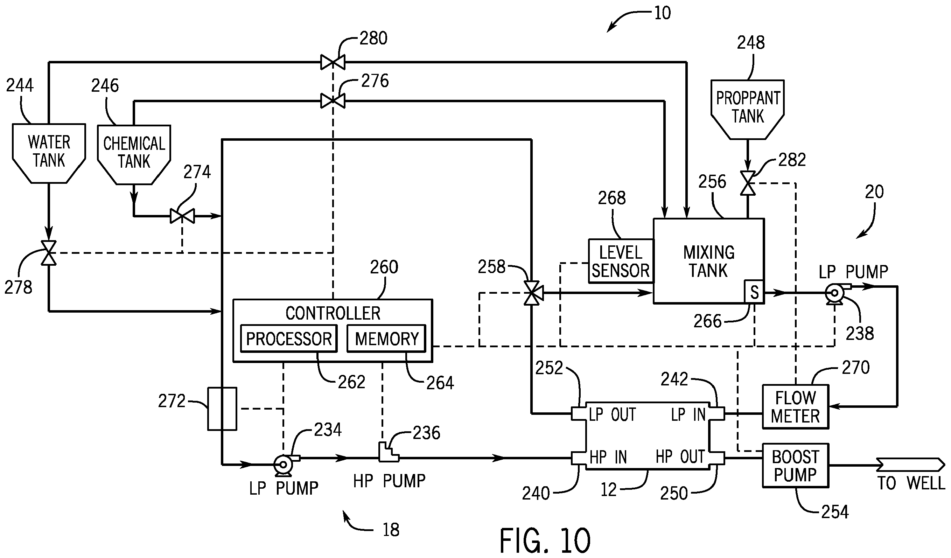

FIG. 10 is a schematic diagram of an embodiment of the frac system 10 where the hydraulic energy transfer system 12 may be a hydraulic turbocharger 40, a reciprocating IPX 90, or a combination thereof. As explained above, the hydraulic turbocharger 40 or reciprocating IPX 90 protect hydraulic fracturing equipment (e.g., high-pressure pumps), while enabling high-pressure frac fluid to be pumped into the well 14 during fracing operations. As illustrated, the frac system 10 includes one or more first fluid pumps 18 and one or more second fluid pumps 20. The first fluid pumps 18 may include a low-pressure pump 234 and a high-pressure pump 236, while the second fluid pumps 20 may include a low-pressure pump 238. In some embodiments, the frac system 10 may include additional first fluid pumps 18 (e.g., additional low-, intermediate-, and/or high-pressure pumps) and second fluid pumps 20 (e.g., low-pressure pumps). In operation, the first fluid pumps 18 and second fluid pumps 20 pump respective first and second fluids (e.g., proppant free fluid and proppant laden fluid) into the hydraulic energy transfer system 12 where the fluids exchange work and pressure. As explained above, the hydraulic turbocharger 40 and reciprocating IPX 90 exchange work and pressure without mixing the first and second fluids. As a result, the hydraulic turbocharger 40 and reciprocating IPX 90 high-pressure pump 236 protect the first fluid pumps 18 from exposure to the second fluid (e.g., proppant containing fluid). In other words, the second fluid pumps 18 are not subject to increased abrasion and/or wear caused by the proppant (e.g., solid particulate).

As illustrated, the first fluid low-pressure pump 234 fluidly couples to the first fluid high-pressure pump 236. In operation, the first fluid low-pressure pump 234 receives the first fluid (e.g., proppant free fluid, substantially proppant free fluid) and increases the pressure of the first fluid for use by the first fluid high-pressure pump 236. The first fluid may be a combination of water from a water tank 244 and chemicals from a chemical tank 246. However, in some embodiments, the first fluid may be only water or substantially water (e.g., 50, 60, 70, 80, 90, 95, or more percent water). The first fluid high-pressure pump 236 then pumps the first fluid through a high-pressure inlet 240 and into the hydraulic energy transfer system 12. The pressure of the first fluid then transfers to the second fluid (e.g., proppant laden fluid, frac fluid), which enters the hydraulic energy transfer system 12 through a second fluid low-pressure inlet 242. The second fluid is a frac fluid containing proppant (e.g., sand, ceramic, etc.) from a proppant tank 248. After exchanging pressure, the second fluid exits the hydraulic energy transfer system 12 through a high-pressure outlet 250 and enters the well 14, while the first fluid exits at a reduced pressure through the low-pressure outlet 252. In some embodiments, the frac system 10 may include a boost pump 254 that further raises the pressure of the second fluid before entering the well 14.

After exiting the outlet 252 at a low-pressure, the first fluid may be recirculated through the first fluid pumps 18 and/or pass through the mixing tank 256. For example, a three-way valve 258 may control whether all of or a portion of the first fluid is recirculated through the first fluid pumps 18, or whether all of or a portion of the first fluid is directed through the mixing tank 256 to form the second fluid. If the first fluid is directed to the mixing tank 256, the mixing tank 256 combines the first fluid with proppant from the proppant tank 248 to form the second fluid (e.g., frac fluid). In some embodiments, the mixing tank 256 may receive water and chemicals directly from the water tank 244 and the chemical tank 246 to supplement or replace the first fluid passing through the hydraulic energy transfer system 12. The mixing tank 256 may then combine these fluids with proppant from the proppant tank 248 to produce the second fluid (e.g., frac fluid).

In order to control the composition (e.g., the percentages of chemicals, water, and proppant) and flow of the first and second fluids, the frac system 10 may include a controller 260. For example, the controller 260 may maintain flow, composition, and pressure of the first and second fluids within threshold ranges, above a threshold level, and/or below a threshold level. The controller 260 may include one or more processors 262 and a memory 264 that receives feedback from sensors 266 and 268; and flow meters 270 and 272 in order to control the composition and flow of the first and second fluids into the hydraulic energy transfer system 12. For example, the controller 260 may receive feedback from sensor 266 that indicates the chemical composition of the second fluid is incorrect. In response, the controller 260 may open or close valves 274 or 276 to change the amount of chemicals entering the first fluid or entering the mixing tank 256 directly. In another situation, the controller 260 may receive a signal from the flow meter 272 in the first fluid flow path that indicates a need for an increased flow rate of the first fluid. Accordingly, the controller 260 may open valve 278 and valve 274 to increase the flow of water and chemicals through the frac system 10. The controller 260 may also monitor the composition (e.g., percentage of proppant, water, etc.) of the second fluid in the mixing tank 256 with the level sensor 268 (e.g., level control). If the composition is incorrect, the controller 260 may open and close valves 258, 274, 276, 278, 280, and 282 to increase or decrease the flow of water, chemicals, and/or proppant into the mixing tank 256. In some embodiments, the frac system 10 may include a flow meter 270 coupled to the fluid flow path of the second fluid. In operation, the controller 260 monitors the flow rate of the second fluid into the hydraulic energy transfer system 12 with the flow meter 270. If the flow rate of the second fluid is too high or low, the controller 260 may open and close valves 258, 274, 276, 278, 280, and 282 and/or control the second fluid pumps 20 to increase or reduce the second fluid's flow rate.

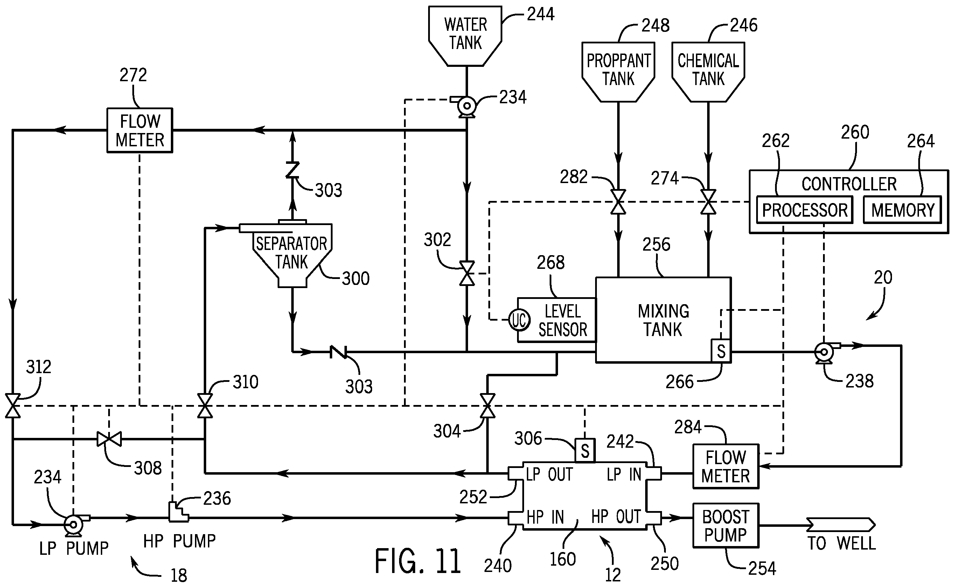

FIG. 11 is a schematic diagram of an embodiment of the frac system 10 where the hydraulic energy transfer system 12 may be the rotary IPX 160. As illustrated, the frac system 10 includes one or more first fluid pumps 18 and one or more second fluid pumps 20. The first fluid pumps 18 may include one or more low-pressure pumps 234 and one or more high-pressure pumps 236, while the second fluid pumps 20 may include one or more low-pressure pumps 238. For example, some embodiments may include multiple low-pressure pumps 234 and 238 to compensate for pressure losses in fluid lines (e.g., pipes, hoses). In operation, the rotary IPX 160 enables the first and second fluids (e.g., proppant free fluid and proppant laden fluid) to exchange work and pressure while reducing or blocking contact between the second fluid (e.g., proppant laden fluid, frac fluid) and the first fluid pumps 18. Accordingly, the frac system 10 is capable of pumping the second fluid at high pressures into the well 14, while reducing wear caused by the proppant (e.g., solid particulate) on the first fluid pumps 18 (e.g., high-pressure pump 236).

In operation, the first fluid low-pressure pump 234 receives the first fluid (e.g., proppant free fluid, substantially proppant free fluid) and increases the pressure of the first fluid for use by the first fluid high-pressure pump 236. The first fluid may be water from the water tank 244, or a combination of water from the water tank 244 and chemicals from the chemical tank 246. The first fluid high-pressure pump 236 then pumps the first fluid through a high-pressure inlet 240 and into the rotary IPX 160. The pressure of the first fluid then transfers to the second fluid (e.g., proppant containing fluid, such as frac fluid), entering the rotary IPX 160 through a second fluid low-pressure inlet 242. After exchanging pressure, the second fluid exits the rotary IPX 160 through a high-pressure outlet 250 and enters the well 14, while the first fluid exits at a reduced pressure through the low-pressure outlet 252. In some embodiments, the frac system 10 may include a boost pump 254 that further raises the pressure of the second fluid.

As the first and second fluids exchange pressures within the rotary IPX 160, some of the second fluid (e.g., leakage fluid) may combine with the first fluid and exit the rotary IPX 160 through the low-pressure outlet 252 of the rotary IPX 160. In other words, the fluid exiting the low-pressure outlet 252 may be a combination of the first fluid plus some of the second fluid that did not exit the rotary IPX 160 through the high-pressure outlet 250. In order to protect the first fluid pumps 18, the frac system 10 may direct a majority of the combined fluid (i.e., a mixture of the first and second fluids) to the mixing tank 256 where the combined fluid is converted into the second fluid by adding more proppant and chemicals. Any excess combined fluid not needed in the mixing tank 256 may be sent to a separator 300 (e.g., separator tank, hydro cyclone) where proppant is removed, converting the combined fluid into the first fluid. The substantially proppant free first fluid may then exit the separator 300 for recirculation through the first fluid pumps 18. The remaining combined fluid may then exit the separator tank 300 for use in the mixing tank 256. The ability to direct a majority of the combined fluid exiting the rotary IPX 160 into the mixing tank 256 enables the frac system 10 to use a smaller separator 300 while simultaneously reducing thermal stress in the frac system 10. For example, as the high-pressure pump 236 pressurizes the first fluid, the pressurization heats the first fluid. By sending a majority of the previously pressurized first fluid through the mixing tank 256 and then into the well 14, the frac system 10 reduces thermal stress on the first fluid pumps 18, the rotary IPX 160, and other frac system 10 components. Moreover, a smaller separator may reduce the cost, maintenance, and footprint of the frac system 10.

In the mixing tank, water 256, chemicals, and proppant are combined in the proper percentages/ratios to form the second fluid (e.g., frac fluid). As illustrated, the mixing tank 256 couples to the proppant tank 248, the chemical tank 246, the rotary IPX 160 through the low-pressure outlet 252, the separator 300, and the water tank 244. Accordingly, the mixing tank 256 may receive fluids and proppant from a variety of sources enabling the mixing tank 256 to produce the second fluid. For example, in the event that the combined fluid exiting the rotary IPX 160 through the low-pressure outlet 252 is insufficient to form the proper mixture of the second fluid, the frac system 10 may open a valve 302 enabling water from the water tank 244 to supplement the combined fluid exiting the rotary IPX 160. In order to block the flow of fluid from the water tank 244 into the separator 300 the frac system 10 may include check valves 303. After obtaining the proper percentages/ratios to form the second fluid (e.g., frac fluid), the second fluid exits the mixing tank 256 and enters the second fluid pumps 20. The second fluid pumps 20 then pump the second fluid (e.g., proppant-laden fluid, frac fluid) into the rotary IPX 160. In the rotary IPX 160, the first fluid contacts and increases the pressure of the second fluid driving the second fluid out of the rotary IPX 160 and into the well 14.

In order to control the composition (e.g., percentages of chemicals, water, and proppant) and flow of the first and second fluids, the frac system 10 may include a controller 260. For example, the controller 260 may maintain flow, composition, and pressure of the first and second fluids within threshold ranges, above a threshold level, and/or below a threshold level. The controller 260 may include one or more processors 262 and a memory 264 that receive feedback from sensors 266 and 268; and flow meters 270 and 272 to control the composition and flow of the first and second fluids into the rotary IPX 160. For example, the controller 260 may receive feedback from sensor 266 that indicates the chemical composition of the second fluid is incorrect. In response, the controller 260 may open or close a valve 274 to change the amount of chemicals entering the mixing tank 256. In some embodiments, the controller 260 may also monitor the percentage of proppant, water, etc. in the second fluid in the mixing tank 256 with the level sensor 268 (e.g., level control). If the composition is incorrect, the controller 260 may open and close valves 274, 282, and 302 to increase or decrease the flow of water, chemicals, and/or proppant into the mixing tank 256. In another situation, the controller 260 may receive a signal from the flow meter 272 that indicates the flow rate of the first fluid is too high or low. The controller 260 may then increase or decrease the speed of the low-pressure pump 234 to change the flow rate of the first fluid. The frac system 10 may also monitor the flow rate of the second fluid with the flow meter 270. If the flow rate of the second fluid is too high or low, the controller 260 may manipulate the valves 302 and 304; and/or increase/decrease the speed of the second pumps 20. In some embodiments, the controller 260 may also monitor a sensor 306 (e.g., vibration, optical, magnetic, etc.) that detects whether the rotary IPX 160 is no longer rotating (e.g., stalled). If the rotary IPX 160 stalls, the controller 160 may open a bypass valve 308 and close valves 304, 310, and 312 to block the flow of fluid from the low-pressure outlet 252 to the mixing tank 256, as well as block the flow of the first fluid through the first fluid pumps 18. The controller 260 may then open the valve 302 to pump water directly into the mixing tank 256 to produce the second fluid. The second fluid low-pressure pump 238 will then pump the second fluid through the rotary IPX 160 and bypass valve 308 to the first fluid pumps 18. The first fluid pumps 18 will then increase the pressure of the second fluid driving the second fluid through the rotary IPX 160 and into the well 14 for fracing. In this manner, the frac system 10 of FIG. 8 enables continuous fracing operations if the rotary IPX 160 stalls.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the scope of the invention as defined by the following appended claims.

## Claims

1. A system, comprising:
a frac system (10), comprising:
a hydraulic energy transfer system (12) configured to exchange pressures between a first fluid and a second fluid, wherein the first fluid is a substantially proppant free fluid and the second fluid is a proppant laden fluid,
wherein the hydraulic energy transfer system (12) is configured to minimize or inhibit mixing between the first and second fluids,
**characterized in that**
the hydraulic energy transfer system (12) comprises a hydraulic turbo-charger (40).

2. A system, comprising:
a frac system (10), comprising:
a hydraulic energy transfer system (12) configured to exchange pressures between a first fluid and a second fluid, wherein the first fluid is a substantially proppant free fluid and the second fluid is a proppant laden fluid,
wherein the hydraulic energy transfer system (12) is configured to minimize or inhibit mixing between the first and second fluids,
**characterized in that**
the hydraulic energy transfer system (12) comprises a rotary isobaric pressure exchanger (160).

3. A system, comprising:
a frac system (10), comprising:
a hydraulic energy transfer system (12) configured to exchange pressures between a first fluid and a second fluid, wherein the first fluid is a substantially proppant free fluid and the second fluid is a proppant laden fluid,
wherein the hydraulic energy transfer system (12) is configured to minimize or inhibit mixing between the first and second fluids,
**characterized in that**
the hydraulic energy transfer system (12) comprises a reciprocating isobaric pressure exchanger (90), wherein the reciprocating isobaric pressure exchanger (90) comprises:
a first pressure vessel (92) having an inlet and an outlet (122) and comprising a first pressure vessel piston (116) between the inlet and the outlet;
a second pressure (94) vessel having an inlet and an outlet (134) and comprising a second pressure vessel piston (128) between the inlet and the outlet;
a valve (96) comprising a first piston (98), a second piston (100) and a shaft (102) having an axis, wherein the shaft (102) couples the first piston to the second piston and to a drive (104);
said drive (104) driving the valve (96) in alternating axial directions (106, 108) relative to a high pressure first fluid inlet (110), to two low-pressure outlets (114, 112) and to the inlets of the first and second pressure vessels, between a first position and a second position;
wherein in the first position, the valve (96) uses the first and second pistons (98, 100) to direct the first fluid from the high pressure inlet (110) into the first pressure vessel (92) where said first fluid drives the first pressure vessel piston (116) in a vessel first direction (118) which increases the pressure of the second fluid in the first pressure vessel, while the valve (96) blocks flow of said first fluid into the second pressure vessel (94) or out of the valve (96) through the low-pressure outlets (112, 114);
wherein in the second position, the valve (96) directs the first fluid into the second pressure vessel (94) where said first fluid drives the second pressure vessel piston (128) in the vessel first direction (118) to increase the pressure of the second fluid in the second pressure vessel, while the valve (96) blocks flow of said first fluid into the first pressure vessel (92) or out of the valve (96) through the low-pressure outlets (112, 114).

4. The system of any of the preceding claims, wherein the frac system (10) comprises a controller (260) that controls the flow of the first fluid and the second fluid into the hydraulic energy transfer system (12).

5. The system of claim 4, wherein the controller (260) communicates with a first flow meter (272) configured to measure a first flow rate of the first fluid, to control the flow of the first fluid into the hydraulic energy transfer system (12).

6. The system of any of the preceding claims, wherein the frac system (10) comprises a first pump (18) and a second pump (20), the first pump (18) is configured to pump the first fluid into the hydraulic energy transfer system (12), and the second pump (20) is configured to pump the second fluid into the hydraulic energy transfer system (12).

7. The system of claim 6, wherein the first pump (18) is a high-pressure pump and the second pump (20) is a low-pressure pump.

8. The system of claim 7, wherein the hydraulic energy transfer system (12) is configured to block the flow of the second fluid through the high-pressure pump (18) while exchanging pressure between the first fluid and the second fluid.

9. The system of claim 8, when claim 6 is dependent on claim 2 or when claim 4 is dependent on claim 2, comprising a bypass valve (308) configured to redirect the second fluid through the high-pressure pump (18).

10. The system of claim 5 or of any of the preceding claims 6-9 when claim 6 is dependent on claim 5, wherein the frac system (10) further comprises:
a second flow meter (270) configured to measure a second flow rate of the second fluid;
the controller (260) coupled to the first and second flow meters (272, 270) and configured to control the first flow rate of the first fluid and the second flow rate of the second fluid into the hydraulic energy transfer system (12) using feedback from the first and second flow meters (272, 270).

## Patentansprüche

1. Ein System, das folgendes umfasst:
ein Fracking-System (10), das folgendes umfasst:
ein hydraulisches Energieübertragungssystem (12), das konfiguriert ist, um Drücke zwischen einem ersten Fluid und einem zweiten Fluid auszutauschen, wobei das erste Fluid ein im Wesentlichen stützmittelfreies Fluid ist und das zweite Fluid ein stützmittelbeladenes Fluid ist,
wobei das hydraulische Energieübertragungssystem (12) konfiguriert ist, um ein Vermischen zwischen dem ersten und zweiten Fluid zu minimieren oder zu verhindern,
**dadurch gekennzeichnet, dass**
das hydraulische Energieübertragungssystem (12) einen hydraulischen Turbolader (40) umfasst.

2. Ein System, das folgendes umfasst:
ein Fracking-System (10), das folgendes umfasst:
ein hydraulisches Energieübertragungssystem (12), das konfiguriert ist, um Drücke zwischen einem ersten Fluid und einem zweiten Fluid auszutauschen, wobei das erste Fluid ein im Wesentlichen stützmittelfreies Fluid und das zweite Fluid ein stützmittelbeladenes Fluid ist,
wobei das hydraulische Energieübertragungssystem (12) konfiguriert ist, um die Vermischung zwischen dem ersten und zweiten Fluid zu minimieren oder zu verhindern,
**dadurch gekennzeichnet, dass**
das hydraulische Energieübertragungssystem (12) einen rotierenden isobaren Druckaustauscher (160) umfasst.

3. Ein System, das folgendes umfasst:
ein Fracking-System (10), das folgendes umfasst:
ein hydraulisches Energieübertragungssystem (12), das konfiguriert ist, um Drücke zwischen einem ersten Fluid und einem zweiten Fluid auszutauschen, wobei das erste Fluid ein im Wesentlichen stützmittelfreies Fluid und das zweite Fluid ein stützmittelbeladenes Fluid ist,
wobei das hydraulische Energieübertragungssystem (12) konfiguriert ist, um die Vermischung zwischen dem ersten und zweiten Fluid zu minimieren oder zu verhindern,
**dadurch gekennzeichnet, dass**
das hydraulische Energieübertragungssystem (12) einen sich hin- und her bewegenden isobaren Druckaustauscher (90) umfasst, wobei der sich hin- und her bewegende isobare Druckaustauscher (90) umfasst:
einen ersten Druckbehälter (92) mit einem Einlass und einem Auslass (122) und der einen ersten Druckbehälterkolben (116) zwischen dem Einlass und dem Auslass umfasst;
einen zweiten Druckbehälter (94) mit einem Einlass und einem Auslass (134) und der einen zweiten Druckbehälterkolben (128) zwischen dem Einlass und dem Auslass umfasst;
ein Ventil (96), das einen ersten Kolben (98), einen zweiten Kolben (100) und eine Welle (102) mit einer Achse umfasst, wobei die Welle (102) den ersten Kolben mit dem zweiten Kolben und mit einem Antrieb (104) verbindet;
wobei der Antrieb (104) das Ventil (96) in wechselnden axialen Richtungen (106, 108) relativ zu einem ersten Hochdruckfluideinlass (110), zu zwei Niederdruckauslässen (114, 112) und zu den Einlässen des ersten und zweiten Druckbehälters zwischen einer ersten Position und einer zweiten Position antreibt;
wobei das Ventil (96) in der ersten Position den ersten und zweiten Kolben (98, 100) verwendet, um das erste Fluid von dem Hochdruckeinlass (110) in den ersten Druckbehälter (92) zu leiten, in dem das erste Fluid den ersten Druckbehälterkolben (116) in eine erste Behälterrichtung (118) bewegt, das den Druck des zweiten Fluids in dem ersten Druckbehälter erhöht, während das Ventil (96) den Fluss des ersten Fluids in den zweiten Druckbehälter (94) oder aus dem Ventil (96) durch die Niederdruckauslässe (112, 114) blockiert;
wobei das Ventil (96) in der zweiten Position das erste Fluid in den zweiten Druckbehälter (94) leitet, in dem das erste Fluid den zweiten Druckbehälterkolben (128) in der ersten Behälterrichtung (118) bewegt, um den Druck des zweiten Fluids in dem zweiten Druckbehälter zu erhöhen, während das Ventil (96) den Fluss des ersten Fluids in den ersten Druckbehälter (92) oder aus dem Ventil (96) durch die Niederdruckauslässe (112, 114) blockiert.

4. System nach einem der vorhergehenden Ansprüche, wobei das Fracking-System (10) einen Regler (260) umfasst, der den Fluss des ersten Fluids und des zweiten Fluids in das hydraulische Energieübertragungssystem (12) steuert.

5. System nach Anspruch 4, wobei der Regler (260) mit einem ersten Durchflussmesser (272) kommuniziert, der konfiguriert ist, um eine erste Durchflussrate des ersten Fluids zu messen, und um den Fluss des ersten Fluids in das hydraulische Energieübertragungssystem (12) zu steuern.

6. System nach einem der vorhergehenden Ansprüche, wobei das Fracking-System (10) eine erste Pumpe (18) und eine zweite Pumpe (20) umfasst, wobei die erste Pumpe (18) konfiguriert ist, um das erste Fluid in das hydraulische Energieübertragungssystem (12) zu pumpen, und die zweite Pumpe (20) konfiguriert ist, um das zweite Fluid in das hydraulische Energieübertragungssystem (12) zu pumpen.

7. System nach Anspruch 6, wobei die erste Pumpe (18) eine Hochdruckpumpe und die zweite Pumpe (20) eine Niederdruckpumpe ist.

8. System nach Anspruch 7, wobei das hydraulische Energieübertragungssystem (12) konfiguriert ist, um den Fluss des zweiten Fluids durch die Hochdruckpumpe (18) zu blockieren während Druck zwischen dem ersten Fluid und dem zweiten Fluid ausgetauscht wird.

9. System nach Anspruch 8, wenn Anspruch 6 von Anspruch 2 abhängig ist oder wenn Anspruch 4 von Anspruch 2 abhängig ist, umfasst ein Bypassventil (308), das konfiguriert ist, um das zweite Fluid durch die Hochdruckpumpe (18) umzuleiten.

10. System nach Anspruch 5 oder nach einem der vorhergehenden Ansprüche 6-9, wenn Anspruch 6 von Anspruch 5 abhängig ist, wobei das Fracking-System (10) ferner umfasst:
einen zweiten Durchflussmesser (270), der konfiguriert ist, um eine zweite Durchflussrate des zweiten Fluids zu messen;
den Regler (260), der mit dem ersten und dem zweiten Durchflussmesser (272, 270) verbunden und konfiguriert ist, um die erste Durchflussrate des ersten Fluids und die zweite Durchflussrate des zweiten Fluids in das hydraulische Energieübertragungssystem (12) zu steuern, unter Verwendung von Feedback von dem ersten und dem zweiten Durchflussmesser (272, 270).

## Revendications

1. Système, comprenant :
un système de fracturation (10), comprenant :
un système de transfert d'énergie hydraulique (12) configuré pour échanger des pressions entre un premier fluide et un second fluide, dans lequel le premier fluide est un fluide sensiblement exempt d'agent de soutènement et le second fluide est un fluide chargé en agent de soutènement,
dans lequel le système de transfert d'énergie hydraulique (12) est configuré pour minimiser ou inhiber un mélange entre les premier et second fluides,
**caractérisé en ce que**
le système de transfert d'énergie hydraulique (12) comprend un turbocompresseur hydraulique (40).

2. Système, comprenant :
un système de fracturation (10), comprenant :
un système de transfert d'énergie hydraulique (12) configuré pour échanger des pressions entre un premier fluide et un second fluide, dans lequel le premier fluide est un fluide sensiblement exempt d'agent de soutènement et le second fluide est un fluide chargé en agent de soutènement,
dans lequel le système de transfert d'énergie hydraulique (12) est configuré pour minimiser ou inhiber un mélange entre les premier et second fluides,
**caractérisé en ce que**
le système de transfert d'énergie hydraulique (12) comprend un échangeur de pression isobare rotatif (160).

3. Système, comprenant :
un système de fracturation (10), comprenant :
un système de transfert d'énergie hydraulique (12) configuré pour échanger des pressions entre un premier fluide et un second fluide, dans lequel le premier fluide est un fluide sensiblement exempt d'agent de soutènement et le second fluide est un fluide chargé en agent de soutènement,
dans lequel le système de transfert d'énergie hydraulique (12) est configuré pour minimiser ou inhiber un mélange entre les premier et second fluides,
**caractérisé en ce que**
le système de transfert d'énergie hydraulique (12) comprend un échangeur de pression isobare à mouvement de va-et-vient (90), dans lequel l'échangeur de pression isobare à mouvement de va-et-vient (90) comprend :
une première enceinte sous pression (92) ayant une entrée et une sortie (122) et comprenant un piston de première enceinte sous pression (116) entre l'entrée et la sortie ;
une seconde enceinte sous pression (94) ayant une entrée et une sortie (134) et comprenant un piston de seconde enceinte sous pression (128) entre l'entrée et la sortie ;
une vanne (96) comprenant un premier piston (98), un second piston (100) et un arbre (102) ayant un axe, dans lequel l'arbre (102) couple le premier piston au second piston et à un entraînement (104) ;
ledit entraînement (104) entraînant la vanne (96) dans des directions axiales alternées (106, 108) par rapport à une première entrée de fluide haute pression (110), à deux sorties basse pression (114, 112) et aux entrées des première et seconde enceinte sous pression, entre une première position et une seconde position ;
dans lequel dans la première position, la vanne (96) utilise les premier et second pistons (98, 100) pour diriger le premier fluide provenant de l'entrée haute pression (110) dans la première enceinte sous pression (92) où ledit premier fluide entraîne le piston de première enceinte sous pression (116) dans une première direction d'enceinte (118) qui augmente la pression du second fluide dans la première enceinte sous pression, tandis que la vanne (96) bloque l'écoulement dudit premier fluide dans la seconde enceinte sous pression (94) ou hors de la vanne (96) à travers les sorties basse pression (112, 114) ;
dans lequel dans la seconde position, la vanne (96) dirige le premier fluide dans la seconde enceinte sous pression (94) où ledit premier fluide entraîne le piston de seconde enceinte sous pression (128) dans la première direction d'enceinte (118) pour augmenter la pression du second fluide dans la seconde enceinte sous pression, tandis que la vanne (96) bloque l'écoulement dudit premier fluide dans la première enceinte sous pression (92) ou hors de la vanne (96) à travers les sorties basse pression (112, 114).

4. Système selon l'une quelconque des revendications précédentes, dans lequel le système de fracturation (10) comprend un contrôleur (260) qui commande l'écoulement du premier fluide et du second fluide dans le système de transfert d'énergie hydraulique (12).

5. Système selon la revendication 4, dans lequel le contrôleur (260) communique avec un premier débitmètre (272) configuré pour mesurer un premier débit du premier fluide, afin de commander l'écoulement du premier fluide dans le système de transfert d'énergie hydraulique (12).

6. Système selon l'une quelconque des revendications précédentes, dans lequel le système de fracturation (10) comprend une première pompe (18) et une seconde pompe (20), la première pompe (18) est configurée pour pomper le premier fluide dans le système de transfert d'énergie hydraulique (12) et la seconde pompe (20) est configurée pour pomper le second fluide dans le système de transfert d'énergie hydraulique (12).

7. Système selon la revendication 6, dans lequel la première pompe (18) est une pompe haute pression et la seconde pompe (20) est une pompe basse pression.

8. Système selon la revendication 7,
dans lequel le système de transfert d'énergie hydraulique (12) est configuré pour bloquer l'écoulement du second fluide à travers la pompe haute pression (18) tout en échangeant de la pression entre le premier fluide et le second fluide.

9. Système selon la revendication 8, lorsque la revendication 6 est dépendante de la revendication 2 ou lorsque la revendication 4 est dépendante de la revendication 2, comprenant une vanne de dérivation (308) configurée pour rediriger le second fluide à travers la pompe haute pression (18).

10. Système selon la revendication 5 ou selon l'une quelconque des revendications 6 à 9 précédentes lorsque la revendication 6 est dépendante de la revendication 5, dans lequel le système de fracturation (10) comprend en outre :
un second débitmètre (270) configuré pour mesurer un second débit du second fluide ;
le contrôleur (260) couplé aux premier et second débitmètres (272, 270) et configuré pour commander le premier débit du premier fluide et le second débit du second fluide dans le système de transfert d'énergie hydraulique (12) à l'aide d'une rétroaction provenant des premier et second débitmètres (272, 270).
